Europäisches Patentamt

European Patent Office

Office européen des brevets

(11) Numéro de publication: **0 274 304 B1**

# FASCICULE DE BREVET EUROPEEN

(45) Date de publication de fascicule du brevet:
03.04.91

(51) Int. Cl.⁵: **B01D 46/30**

(21) Numéro de dépôt: 87402746.9

(22) Date de dépôt: 03.12.87

(54) **Ensemble de filtration pour fluides gazeux.**

(30) Priorité: 05.12.86 FR 8617100

(43) Date de publication de la demande:
13.07.88 Bulletin 88/28

(45) Mention de la délivrance du brevet:
03.04.91 Bulletin 91/14

(84) Etats contractants désignés:
AT BE CH DE ES FR GB GR IT LI LU NL SE

(56) Documents cités:
US-A- 4 012 210
US-A- 4 290 785
US-A- 4 379 750

(73) Titulaire: **ELECTRICITE DE FRANCE Service National**
**2, rue Louis Murat**
**F-75008 Paris(FR)**

(72) Inventeur: **Lebrun, Bernard**
**6, Allée Champlain**
**F-78560 Port-Marly(FR)**
Inventeur: **Couvrat-Desvergnes, Alexandre**
**62, rue Tiquetonne**
**F-75002 Paris(FR)**

(74) Mandataire: **Martin, Jean-Jacques et al**
**Cabinet REGIMBEAU 26, Avenue Kléber**
**F-75116 Paris(FR)**

Description

La présente invention concerne le domaine de la filtration, et plus particulièrement la filtration d'un débit important de fluides gazeux traversant à basse vitesse une couche de média filtrant.

Il est bien connu que l'efficacité de la filtration dépend principalement de la nature et de la granulométrie du filtrant utilisé, et de l'épaisseur du lit horizontal ou non, constitué par la couche de ce média filtrant.

Le problème du maintien dans le temps de cette épaisseur devient crucial dans le cadre de certaines applications, pour lesquelles il s'agit de filtrer un gaz chargé en particules avant de le rejeter dans l'atmosphère. En effet, une diminution de cette épaisseur peut faire perdre l'efficacité de la filtration et modifier défavorablement les caractéristiques du filtre utilisé, ce qui représente un risque non négligeable pour l'environnement immédiat de l'ensemble de filtration.

Ceci est notamment le cas pour les installations de sûreté équipant les réacteurs nucléaires à eau pressurisée. Bien que la probabilité d'un accident grave soit extrêmement faible, on cherche à éviter toute altération irréversible de la fonction de confinement pouvant resulter d'une surpression interne excessive : il apparaît alors nécessaire de prévoir des installations reliées à l'enceinte de confinement du réacteur, visant à décomprimer puis filtrer les dégagements gazeux, ceci pour écarter tout risque de destruction de l'enceinte de confinement.

Il convient de réaliser que les conditions opératoires sont particulièrement sévères pour de telles applications. En effet, le mélange gazeux à filtrer en phase accidentelle (air, gaz carbonique, vapeur d'eau, oxyde de carbone, aérosols) sort de l'enceinte à 140°C, sous une pression de 5 bars absolus et avec un débit pouvant atteindre 3,5 kg/s. Le mélange gazeux arrivant avec un débit important est d'abord détendu (jusqu'à 1,1 bar absolu), puis doit être filtré par un média filtrant, ledit mélange ayant une vitesse élevée en amont et en aval de la couche de média filtrant, une faible vitesse de passage dans le lit filtrant.

De nombreux essais ont déjà été faits en laboratoire pour tester de telles situations, à échelle réduite.

Une étude particulièrement intéressante a été menée en laboratoire, et a fait l'objet d'une publication lors d'un symposium international qui s'est tenu fin Octobre 1985 à Columbus (Ohio), aux Etats-Unis.

En particulier, dans le cadre d'un programme de Recherche et Développement dénommé PITEAS, un filtre à sable a été développé en laboratoire, et a fait l'objet de nombreuses expériences en faisant varier les caractéristiques du fluide gazeux à filtrer.

Ces expériences ont permis de montrer, grâce aux prélèvements effectués en amont et en aval de l'ensemble de filtration, l'efficacité en laboratoire d'un média filtrant en sable, avec une granulométrie moyenne (de l'ordre de 0,7 mm) et une hauteur (environ 800 mm) appropriées aux caractéristiques recherchées.

L'ensemble de filtration utilisé comportait une enceinte cylindrique en verre, d'environ 1 m de diamètre, présentant une tubulure supérieure d'entrée et une tubulure inférieure de sortie, ces tubulures verticales étant coaxiales au corps principal de l'enceinte. Dans cette enceinte, on a disposé une couche de sable fin constituant un lit horizontal d'une épaisseur de 800 mm. Il fallait naturellement prévoir des moyens de supportage du média filtrant, et des moyens pour récupérer le fluide gazeux filtré et le canaliser vers la sortie.

Pour les moyens de supportage, on a disposé sous la couche de sable, successivement :
- une couche de sable "support" de 50 mm d'épaisseur, d'une granulométrie moyenne nettement supérieure à celle du média filtrant (environ 2 mm),
- un tamis métallique de maille inférieure à la granulométrie moyenne du sable de la couche support,
- un caillebotis en acier galvanisé supporté méoaniquement au moyen de profilés du commerce.

Pour les moyens de récupération, on a prévu un espace libre en partie basse de l'enceinte, entre le caillebotis et la paroi inférieure de laquelle partait la sortie du fluide gazeux filtré.

Si l'on cherchait à extrapoler la conception de ce filtre à sable pour réaliser un ensemble de filtration en vraie grandeur, on se heurterait à de nombreux inconvénients.

D'abord, la présence de la couche de sable support compliquerait les opérations de chargement du filtre, car la garantie d'une épaisseur constante du média filtrant implique naturellement la garantie d'une épaisseur constante de la couche support. De plus, tout contrôle de cette épaisseur s'avère impossible après chargement du média filtrant (on ne peut vérifier que localement l'épaisseur de la couche support). Ceci est un premier inconvénient important, car on ne peut se passer de cette couche support d'épaisseur précise.

Ensuite, la présence nécessaire de l'espace libre inférieur pour récupérer le fluide gazeux filtré impliquerait un risque non négligeable d'effondrement du supportage du média filtrant. Cette hypothèse ne peut être écartée dans la mesure où on n'est jamais certain que des mécanismes de corrosion des parties métalliques du support, liés à des phénomènes de condensation ou d'interaction chimique avec le média filtrant, ne se développeront pas dans le temps. Une telle corrosion quoique peu probable, doit être envisagée ; elle présente le risque de l'effondrement, à moyen ou long terme, le supportage du média filtrant, entraînant ainsi la ruine du filtre.

On pourrait imaginer combler cet espace libre inférieur avec du sable pour écarter le risque d'effondrement, mais cela aurait des conséquences au niveau de la récupération des gaz (perte de charge, faible reprise des vitesses à la sortie), au niveau du poids (environ 70 tonnes supplémentaires), et naturellement au niveau du coût (pour le sable lui-même, et pour les moyens mécaniques de support renforcés en conséquence).

On pourrait tenter de s'inspirer d'autres techniques utilisées dans les filtres à eau, car certains de ces filtres comportent un média filtrant en matériau granulaire comparable au sable utilisé.

Cependant, qu'il s'agisse de bifiltres fermés à deux courants inverses (avec un empilage sur un plancher d'une couche de gros gravier support, d'une couche de gravier de dégrossissage, et d'une double couche de sable filtrant), ou de filtres à lavage par simple retour d'eau comme les filtres Wheeler (avec un empilage, sur une dalle de béton à alvéoles pyramidaux occupés par des boules en porcelaine, de plusieurs couches successives dont la granulométrie décroît progressivement pour se terminer par un sable fin), on trouve toujours la présence d'un plancher support plein, avec un espace inférieur libre. Ces techniques ne comportent ainsi aucun enseignement tendant à écarter le risque d'effondrement du supportage du média filtrant. De plus, l'adoption de tels filtres pour l'application visée impliquerait l'utilisation d'une pression de fonctionnement très élevée pour obtenir une vitesse élevée à la sortie du média filtrant, et donc une structure énorme pour supporter de telles conditions.

La présente invention a pour objet de proposer un ensemble de filtration dont la conception permette de pallier les inconvénients précités, grâce à une structure simple, relativement économique, et fiable dans le temps, en particulier pour ce qui est du risque d'effondrement du supportage du média filtrant.

Un autre objet de l'invention est de proposer un ensemtle de filtration permettant d'obtenir un rapport de vitesses élevé entre la vitesse du fluide gazeux dans le récupérateur et la vitesse dans le média filtrant, par exemple un rapport pouvant atteindre une valeur de 100 ou plus.

Il s'agit plus particulièrement d'un ensemble de filtration pour fluide gazeux, comportant une enceinte de forme générale cylindrique avec une entrée en partie haute, une couche de média filtrant en matériau granulaire traversée à basse vitesse par le fluide gazeux à filtrer, ladite couche constituant un lit horizontal d'épaisseur prédéterminée, des moyens de supportage du média filtrant, et des moyens pour récupérer le fluide gazeux filtré et le canaliser vers une sortie de ladite enceinte, caractérisé par le fait que :

- l'enceinte de filtration présente inférieurement un fond fermé et une sortie latérale,
- les moyens de supportage sont essentiellement constitués par une couche de support en matériau léger dont la granulométrie moyenne est supérieure à celle du média filtrant, ladite couche de support s'étendant jusqu'au fond de l'enceinte de filtration,
- les moyens pour récupérer le fluide gazeux sont essentiellement constitués par une pluralité d'organes tubulaires dont la paroi permet le passage dudit fluide gazeux, ces organes tubulaires étant disposés dans la couche de support en matériau léger, et par un collecteur annulaire dans lequel débouchent lesdits organes tubulaires et sur la périphérie extérieure duquel est prévue la sortie latérale de l'enceinte de filtration.

De préférence, un organe maillé souple est prévu entre la couche de média filtrant et la couche de support, le maillage dudit organe étant choisi inférieur à la granulométrie moyenne du média filtrant pour éviter une ségrégation dudit média filtrant dans la couche de support et garantir le maintien de l'épaisseur prédéterminée pour le lit horizontal ; en particulier, l'organe maillé souple est constitué par une toile tissée, par exemple en fibres de verre.

Selon une caractéristique avantageuse, le matériau léger constituant la couche de support est un matériau granulaire expansé dont la granulométrie moyenne est élevée, en particulier de l'argile expansée.

De préférence, les organes tubulaires prévus dans la couche de support sont disposés sensiblement dans un même plan horizontal. Selon une caractéristique avantageuse, les organes tubulaires prévus dans la couche de support sont des crépines s'étendant sensiblement selon une direction commune ; en particulier, les crépines présentent une extrémité libre lisse reçue dans une ouverture associée de la paroi latérale de l'enceinte de filtration.

Afin d'éviter tout risque de pénétration du média filtrant, il est avantageux que la paroi des crépines présente des trous ou fentes dont le dimensionnement de passage est inférieur à la granulométrie moyenne du média filtrant.

Pour faciliter une utilisation de dimensions importantes, il est avantageux que les crépines s'étendent à partir d'un diamètre commun de l'enceinte de filtration, au niveau duquel est prévue une fixation sur une traverse diamétrale commune des extrémités des demi-crépines ainsi formées.

De préférence, le collecteur annulaire dans lequel débouchent les organes tubulaires ou crépines est constitué par un tore à section rectangulaire essentiellement constante ; en particulier, le collecteur annulaire portant la sortie latérale est fixé sur la paroi latérale de l'enceinte de filtration, de façon à recouvrir une pluralité d'ouvertures ménagées dans ladite paroi pour laisser passer l'extrémité libre des organes tubulaires ou crépines, lesdites ouvertures étant de préférence distribuées régulièrement sur la périphérie de ladite paroi.

Il est avantageux de prévoir que l'ensemble de filtration comporte une passerelle transversale à l'intérieur de l'enceinte de filtration, disposée à un niveau correspondant à la cote prédéterminée de la surface supérieure de la couche de média filtrant : ceci permet à la fois de marcher au-dessus de la couche de média filtrant, et de vérifier le niveau de cette couche. En particulier, la passerelle transversale est de forme cruciforme, selon deux diamètres de l'enceinte de filtration, l'accès de ladite passerelle étant assuré par au moins un trou d'homme prévu dans la paroi latérale de ladite enceinte.

De préférence, le média filtrant est du sable dont la granulométrie moyenne est voisine de 0,7 mm, et le matériau léger constituant la couche de support est une argile expansée dont la granulométrie moyenne se situe entre 10 et 25 mm ; en particulier, les organes tubulaires sont prévus dans la partie supérieure de la couche de support, et sont constitués par des crépines parallèles dont la paroi présente des trous ou fentes d'environ 0,4 mm de dimensionnement de passage.

D'autres caractéristiques et avantages de l'invention apparaîtront plus clairement à la lumière de la description qui va suivre et des dessins annexés, concernant un mode de réalisation particulier, en référence aux figures, où :

- la figure 1 est une coupe axiale d'un ensemble de filtration conforme à l'invention,
- la figure 2 est une coupe selon II-II de la figure 1,
- la figure 3 est une vue latérale en élévation de l'ensemble de filtration de la figure 1, avec un arrachement montrant l'extrémité d'une crépine débouchant dans le collecteur annulaire,
- la figure 4 est une coupe transversale analogue à celle de la figure 2, illustrant l'organisation des organes tubulaires en demi-crépines,
- la figure 5 est une coupe à échelle agrandie illustrant le détail A de la figure 4,
- les figures 6a et 6b illustrent, respectivement en coupe verticale et en vue de dessus, le détail B de la figure 4.

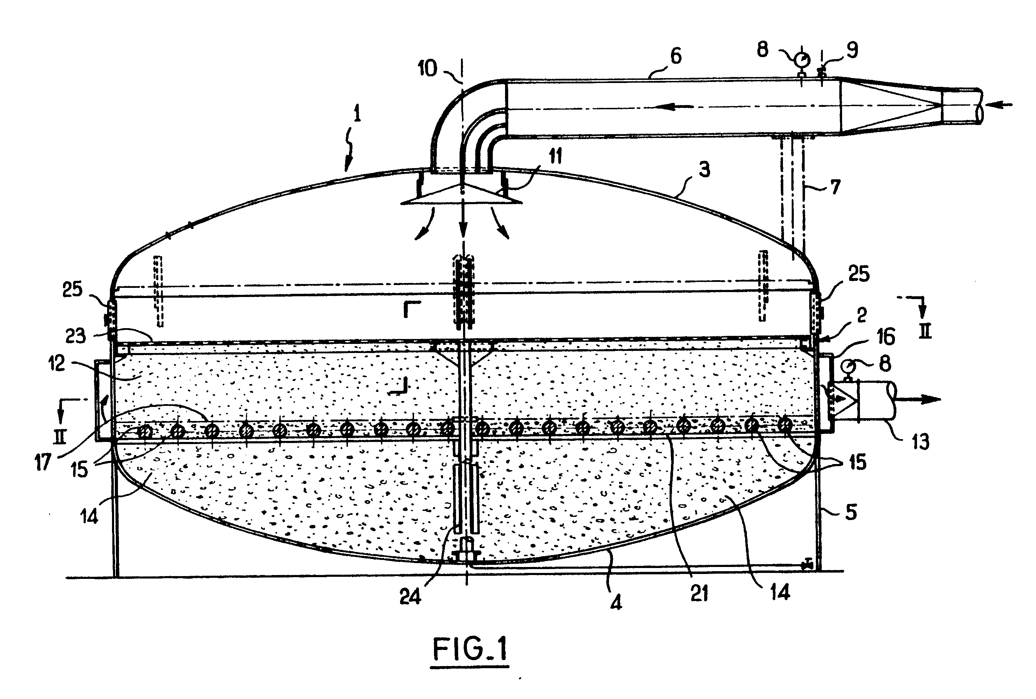

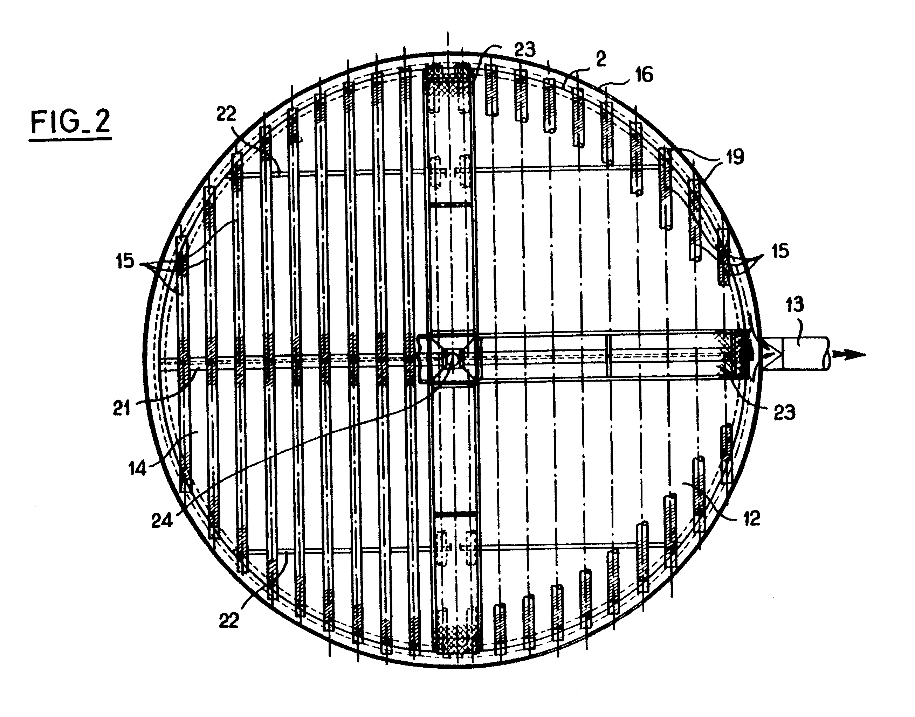

L'ensemble de filtration pour fluide gazeux 1 illustré aux figures 1 et 2 comporte une enceinte 2 de forme générale cylindrique, avec un fond supérieur 3 et un fond inférieur 4 (les deux fonds sont ici bombés), ce dernier étant entouré par une jupe cylindrique 5. Une tubulure d'entrée 6 est prévue pour l'amenée du fluide gazeux à filtrer en partie haute de l'enceinte 2. Cette tubulure 6, supportée par un étrier 7 fixé sur le fond supérieur de l'enceinte, comporte un manomètre de contrôle 8 et une prise pour essais 9 ; elle débouche au niveau de l'axe 10 de l'enceinte, au-dessus d'un cône diffuseur 11.

Dans le cadre de l'application préférentielle envisagée, le fluide gazeux parvenant dans la conduite 6 a été préalablement détendu en amont de l'ensemle de filtration, grâce à un diaphragme (non représenté), de façon que la pression puisse descendre de 5 bars absolus à 1,1 bar absolu. Il convient de noter que l'ensemble de filtration de l'invention est prévu pour fonctionner avec un sens d'écoulement unique du fluide gazeux, du haut vers le bas. La filtration doit pouvoir être réalisée avec un débit important de fluide gazeux, présentant une vitesse élevée en amont et en aval du média de filtration utilisé (par exemple de l'ordre de 40 m/s.), et avec une traversée à basse vitesse dans le média filtrant (de préférence voisine de 0,1 m/s.). En effet, le fluide à filtrer est amené jusqu'au filtre à grande vitesse,d'abord pour diminuer la section de la tuyauterie, ce qui a des conséquences au niveau du poids de l'installation et de son coût, mais aussi pour chasser la condensation éventuelle lorsque le fluide gazeux est chargé en vapeur.

Il est ainsi défini une couche de média filtrant 12 en matériau granulaire, traversée à basse vitesse par le fluide gazeux à filtrer, ladite couche constituant un lit horizontal d'épaisseur prédéterminée. Le média filtrant utilisé pourra être du sable dont la granulométrie moyenne est voisine de 0,7 mm, ou tout autre matériau convenant pour le type d'application envisagé, par exemple des petites billes de verre. Il convient de réaliser que l'exigence d'une faible vitesse de passage du fluide gazeux dans le média filtrant pour une pression de 1,1 bar absolu implique une section importante : à titre indicatif, une vitesse de 0,1 m/s. amènera à choisir une section du filtre de l'ordre de 42 m² pour le débit considéré. On conçoit aisément dans ces conditions l'importance de la structure envisagée pour réaliser d'une part les moyens de supportage du média filtrant, et d'autre part les moyens pour récupérer le fluide gazeux filtré et le canaliser vers la sortie de l'enceinte de filtration.

Ainsi, l'enceinte de filtration 2 présente inférieurement un fond fermé 4 et une sortie latérale 13, contrairement à la structure de l'enceinte utilisée dans le cadre d'essais en laboratoire, du type de celle qui a été décrite plus haut.

Conformément à un aspect essentiel de l'invention, les moyens de supportage de la couche de média filtrant 12 sort essentiellement constitués par une couche de support 14, en matériau léger dont la granulométrie moyenne est supérieure à celle du média filtrant 12, ladite couche de support s'étendant jusqu'au fond 4 de l'enceinte de filtration 12. Le choix du matériau léger utilisé dépendra naturellement du type d'application concerné. Ce choix sera guidé par les caractéristiques mécaniques nécessaires pour supporter la charge du média filtrant, et la pression dynamique à la température considérée, et éventuellement un comportement chimique lui conférant une certaine inertie. On pourra par exemple utiliser de l'argile expansée, avec une granulométrie moyenne se situant de préférence entre 10 et 25 mm, ce qui permet de limiter les pertes de charge lorsque le fluide gazeux passe à travers cette couche de support, et de limiter également le poids de cette couche pour un volume donné. A titre indicatif, en utilisant un sable de 0,7 mm de granulométrie moyenne pour le média filtrant, et de l'argile expansée du type précité pour la couche de support, on obtiendra un rapport voisin de six entre les masses volumiques de ces deux constituants, ce qui confère un gain de masse très appréciable.

A la différence des techniques classiques, il n'y a donc plus d'espace inférieur libre en-dessous du média filtrant, puisque cet espace est entièrement occupé par la couche de support 14 en matériau léger. Cette caractéristique permet déjà d'écarter le risque d'un éventuel effondrement des moyens de supportage, de sorte que l'épaisseur du lit de média filtrant 12 est garantie dans le temps.

En combinaison avec la caractéristique de l'invention relative aux moyens de supportage, il est prévu une autre caractéristique essentielle relative aux moyens pour récupérer le fluide gazeux filtré. Ces moyens sont essentiellement constitués par une pluralité d'organes tubulaires 15 dont la paroi permet le passage dudit fluide gazeux, ces organes tubulaires étant disposés dans la couche de support 14 en matériau léger, et par un collecteur annulaire 16 dans lequel débouchent lesdits organes tubulaires et sur la périphérie extérieure duquel est prévue la sortie latérale 13 de l'enceinte de filtration. Ces moyens de récupération, noyés dans la couche de support 14, permettent au fluide gazeux de repartir à grande vitesse, avec une distribution homogène du fluide gazeux filtré. En disposant les organes tubulaires 15 en partie supérieure de la couche de support 14, on limite la perte de charge tout en permettant une légère accélération du fluide gazeux dans la couche de support, tandis que l'accélération importante se situe dans les organes tubulaires eux-mêmes, puis dans le collecteur annulaire.

Il est avantageusement prévu, entre la couche de média filtrant 12 et la couche de support 14, un organe maillé souple 17, permettant d'éviter une ségrégation dudit média filtrant dans la couche de support et de garantir le maintien de l'épaisseur prédéterminée pour le lit horizontal. Cet organe maillé souple 17 pourra être réalisé sous forme d'une toile tissée, par exemple en fibres de verre ou à partir d'un matériau commercialisé sous la dénomination KEVLAR, avec un maillage choisi inférieur à la granulométrie moyenne du média filtrant. En utilisant un sable de 0,7 mm de granulométrie mcyenne, on obtiendra de bons résultats en choisissant un maillage de l'ordre de 0,2 mm pour la toile souple 17, car ce maillage reste inférieur à la plus petite granulométrie pouvant être rencontrée dans le média filtrant. De plus, cette toile présentera un bon comportement pour résister aux efforts dynamiques en fonctionnement.

Grâce à cette disposition, si l'on fait une comparaison avec la structure de l'ensemble de filtration réalisée en laboratoire dans le cadre du programme PITEAS précité, on constate que la couche de sable de support, présentant une granulométrie de l'ordre de 2 mm et une hauteur de 50 mm, cette dernière devant être réalisée avec une grande précision, a été supprimée. De plus, l'ensemble granulat léger, toile souple, organes tubulaires remplace avantageusement la disposition développée en laboratoire avec tamis métallique, caillebotis en acier galvanisé, espace inférieur de récupération : la masse de support peut être diminuée d'environ douze tonnes en utiisant un fond inférieur bombé et une argile expansée de 300 kg/m$^3$ de masse volumique, et tout risque d'effondrement de supportage du média filtrant est écarté.

Les figures 2 à 4 permettent de mieux distinguer l'organisation spatiale des organes tubulaires 15 dans l'ensemble de filtration de l'invention. Il convient en effet de concourir à une distribution homogène du fluide gazeux, et à une accélération progressive de ce fluide lorsqu'il passe de la couche de support aux organes tubulaires, et enfin au collecteur annulaire. Ces organes tubulaires sont ici des crépines 15 s'étendant sensiblement dans un même plan horizontal, et de préférence selon une direction commune. De telles crépines permettent classiquement d'assurer la séparation physique entre une substance solide et un fluide à récupérer, et sont par exemple utilisées dans de nombreux domaines nécessitant la rétention d'un solide et la récupération d'un fluide (petrochimie, traitement des eaux, déminéraliseurs, filtres à eau). La surface ouverte de la crépine est fonction du débit du fluide que l'on souhaite obtenir, et le pas d'ouverture ou la maille de la crepine doit être inférieur à la granulométrie du solide. En l'espèce, on pourra prévoir des crépines cylindriques dont la paroi présente des trous ou des fentes, en vue d'un dimensionnement de passage inférieur à la granulométrie moyenne du média filtrant. A titre indicatif, on peut prévoir des crépines en acier inoxydable, avec une fente d'ouverture de 0,4 mm, ces crépines étant choisies avec un nombre tel que l'homogénéité du champ des vitesses dans le lit de sable ne soit pas perturbée. Ainsi, en installant vingt crépines de longueur variable et de diamètre 100 mm, on parvient à obtenir une surface ouverte de 7,5 m². On pourra utiliser un récupérateur tubulaire cylindrique à trous ou fentes, ou encore des récupérateurs réalisés en enroulant une spire sur une matrice formée de tiges parallèles.

De cette façon, le fluide gazeux entre en partie supérieure de l'enceinte avec une vitesse qui est par exemple de l'ordre de 42 m/s., traverse le lit de média filtrant avec une vitesse de l'ordre de 0,1 m/s., et récupère, après traversée de la couche support jusqu'à l'entrée des crépines,une vitesse de l'ordre de 0,5 m/s. ; le fluide gazeux provenant des crépines présente alors une accélération sensible (à titre indicatif, la vitesse de récupération des gaz peut être de l'ordre de 12,8 m/s. à la sortie de la plus grande crépine), cette accélération se poursuivant à l'intérieur du collecteur annulaire 16 dans lequel débouchent les extrémités périphériques de toutes les crépines, ce qui permet de récupérer au niveau de la sortie latérale 13 une vitesse de 40 m/s.

De préférence, le collecteur annulaire 16 dans lequel débouchent les organes tubulaires ou crépines est constitué par un tore à section rectangulaire essentiellement constante, la remontée en vitesse finale étant assurée au moyen d'un convergent au niveau de la sortie latérale 13. Ce collecteur annulaire portant la sortie latérale 13 est fixé sur la paroi latérale de l'enceinte de filtration 2, de façon à recouvrir une pluralité d'ouvertures 18 ménagées dans ladite paroi pour laisser passer l'extrémité libre des crépines 15 ; ces ouvertures 18 sont de préférence distribuées régulièrement sur la périphérie de la paroi de l'enceinte.

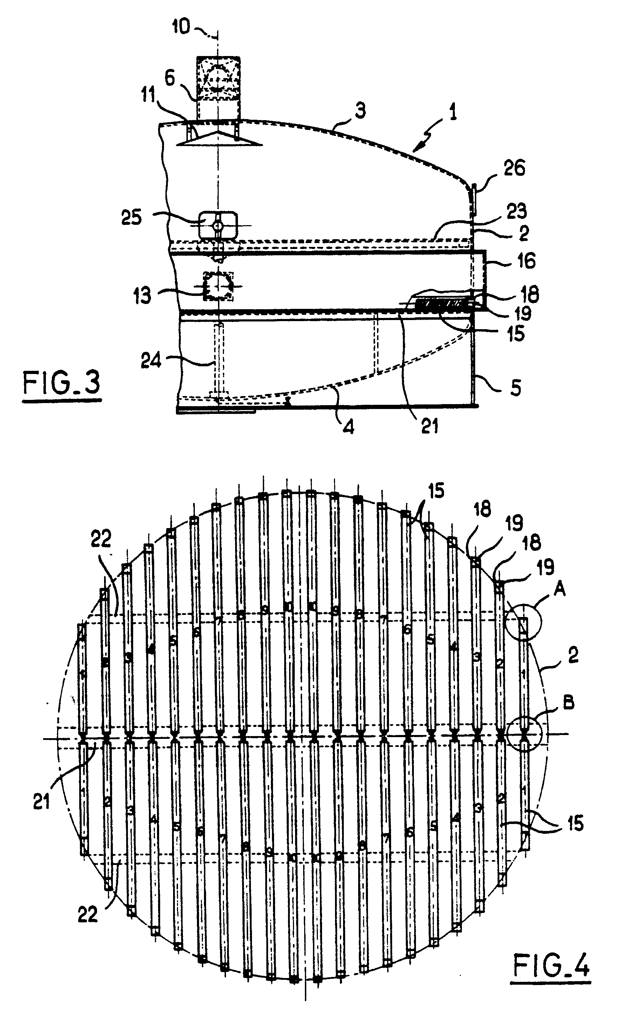

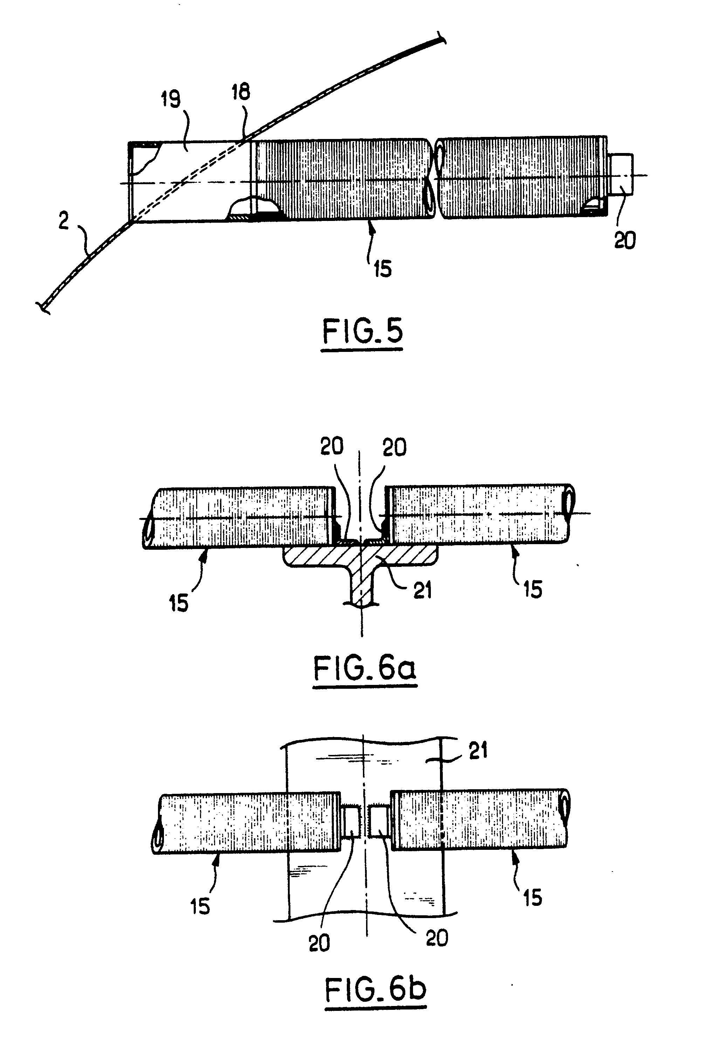

Le détail de la figure 5 illustre une variante dans laquelle l'extrémité des crépines 15, concernant la périphérie de l'enceinte de filtration, se présente sous la forme d'un manchon lisse 19, par exemple soudé au corps de la crépine proprement dit. Ce manchon 19 permet un certain coulissement dans l'ouverture associée 18 de la paroi de l'enceinte 2, ce qui confère une certaine souplesse au système au niveau des dilatations thermiques. Indépendamment de ce problème de dilatation, une liaison étanche à ce niveau n'aurait aucun intérêt, étant donné que le fluide gazeux parvenant en extrémité des crépines a déjà été filtré. On distingue également à l'autre extrémité des crépines un étrier de fixation soudé 20. En effet, compte tenu des dimensions importantes du système, il est intéressant de prévoir que les crépines 15 s'étendent à partir d'un diamètre commun de l'enceinte de filtration, au niveau duquel est prévue une fixation sur une traverse diamétrale commune 21 des extrémités des demi-crépines ainsi formées. Les figures 6a et 6b illustrent le détail de la fixation de l'ensemble des demi-crépines, par exemple par soudure de leur étrier 20 sur la traverse diamétrale commune 21. On assure en même temps une excellente récupération des gaz, car le fluide parvenant dans les crépines se propage immédiatement en s'éloignant de la traverse diamétrale commune en direction du collecteur annulaire. On pourra naturellement prévoir également de renforcer le support mécanique de l'ensemble des crépines en ménageant d'autres traverses non-diamétrales 22, ainsi qu'illustré aux figures 2 et 4.

Il est avantageux de prévoir en outre une passerelle transversale 23 à l'intérieur de l'enceinte de filtration, disposée à un niveau correspondant à la cote prédéterminée de la surface supérieure de la couche de média filtrant 12. Ainsi, cette passerelle, avantageusement de forme cruciforme selon deux diamètres de l'enceinte, permet à la fois le passage du personnel à l'intérieur de l'enceinte sans marcher sur le média filtrant, et de vérifier également le niveau du média filtrant. Il conviendra naturellement d'utiliser un caillebotis suffisamment rigide, mais n'interférant que très peu avec le passage du fluide gazeux. On parvient ainsi à réaliser une structure à la fois légère et rigide,en raccordant la traverse diamétrale 21 et la passerelle cruciforme 23 à un ensemble tubulaire central 24, lequel ensemble tubulaire est de préférence fixé en sa partie inférieure sur le fond 4 de l'enceinte, ainsi qu'illustré à la figure 1.

Les figures 1 et 3 illustrent enfin deux trappes de visite 25, sous forme de portes autoclaves, permettant le passage d'un homme pour accéder à la passerelle cruciforme 23. Les organes 26 (figure 3) sont des oreilles de levage, ici fixées sur la périphérie du fond supérieur 3, en vue de faciliter les opérations de manutention.

L'ensemble de filtration de l'invention présente ainsi de nombreux avantages, d'abord au niveau de la sécurité dans la mesure où la durée de vie du supportage devient considérable, en écartant tout risque d'effondrement qui ferait perdre la hauteur de média filtrant, et pour le type d'application considéré le facteur de décontamination. On retrouve naturellement également un avantage au niveau du poids de l'ensemble, et du coût de construction de celui-ci. Les performances sont enfin élevées, et on peut en particulier citer un rapport important entre la vitesse du fluide gazeux à la sortie des crépines tubulaires et sa vitesse dans le média filtrant (un rapport de cent peut être aisément atteint).

Il va de soi que l'invention n'est nullement limitée aux modes de réalisation qui viennent d'être décrits, mais englobe au contraire toute variante reprenant, avec des moyens équivalents, les caractéristiques essentielles figurant aux revendications.

## Revendications

1. Ensemble de filtration pour fluide gazeux, comportant une enceinte de forme générale cylindrique avec une entrée en partie haute, une couche de média filtrant en matériau granulaire traversée à basse vitesse par le fluide gazeux à filtrer, ladite couche constituant un lit horizontal d'épaisseur prédéterminée, des moyens de supportage du média filtrant, et des moyens pour récupérer le fluide gazeux filtré et le canaliser vers une sortie de ladite enceinte, caractérisé par le fait que :
   - l'enceinte de filtration (2) présente inférieurement un fond fermé (4) et une sortie latérale (13),
   - les moyens de supportage sont essentiellement constitués par une couche de support (14) en matériau léger dont la granulométrie moyenne est supérieure à celle du média filtrant (12), ladite couche de support s'étendant jusqu'au fond (4) de l'enceinte de filtration,
   - les moyens pour récupérer le fluide gazeux sont essentiellement constitués par une pluralité d'organes tubulaires (15) dont la paroi permet le passage dudit fluide gazeux, ces organes tubulaires étant disposés dans la couche de support (14) en matériau léger, et par un collecteur annulaire (16) dans lequel débouchent lesdits organes tubulaires et sur la périphérie extérieure duquel est prévue la sortie latérale (13) de l'enceinte de filtration.

2. Ensemble de filtration selon la revendication 1, caractérisé par le fait qu'un organe maillé souple (17) est prévu entre la couche de média filtrant (12) et la couche de support (14), le maillage dudit organe étant choisi inférieur à la granulométrie moyenne du média filtrant pour éviter une ségrégation dudit média filtrant dans la couche de support et garantir le maintien de l'épaisseur prédéterminée pour le lit horizontal.

3. Ensemble de filtration selon la revendication 2, caractérisé par le fait que 1'organe maillé souple (17) est constitué par une toile tissée, en particulier en fibres de verre.

4. Ensemble de filtration selon l'une des revendications 1 à 3, caractérisé par le fait que le matériau léger constituant la couche de support (14) est un matériau granulaire expansé dont la granulométrie moyenne est élevée, en particulier de l'argile expansée.

5. Ensemble de filtration selon l'une des revendications 1 à 4, caractérisé par le fait que les organes tubulaires (15) prévus dans la couche de support (14) sont disposés sensiblement dans un même plan horizontal.

6. Ensemble de filtration selon la revendication 5, catactérisé par le fait que les organes tubulaires (15) prévus dans la couche de support sont des crépines s'étendant sensiblement selon une direction commune.

7. Ensemble de filtration selon la revendication 6, caractérisé par le fait que les crépines (15) présentent une extrémité libre (19) lisse reçue dans une ouverture associée (18) de la paroi latérale de l'enceinte de filtration.

8. Ensemble de filtration selon l'une des revendications 6 et 7, caractérisé par le fait que la paroi des crépines (15) présente des trous ou fentes dont le dimensionnement de passage est inférieur à la granulométrie moyenne du média filtrant.

9. Ensemble de filtration selon l'une des revendications 6 à 8, caractérisé par le fait que les crépines (15) s'étendent à partir d'un diamètre commune de l'enceinte de filtration, au niveau duquel est prévue une fixation sur une traverse diamétrale commune (21) des extrémités des demi-crépines ainsi formées.

10. Ensemble de filtration selon l'une des revendications 1 à 9, caractérisé par le fait que le collecteur annulaire (16) dans lequel débouchent les organes tubulaires ou crépines (15) est constitué par un tore à section rectangulaire essentiellement constante.

11. Ensemble de filtration selon la revendication 10, caractérisé par le fait que le collecteur annulaire (16) portant la sortie latérale (13) est fixé sur la paroi latérale de l'enceinte de filtration, de façon à recouvrir une pluralité d'ouvertures (18) ménagées dans ladite paroi pour laisser passer l'extrémité libre des organes tubulaires ou crépines (15), lesdites ouvertures étant de préférence distribuées régulièrement sur la périphérie de ladite paroi.

**12.** Ensemble de filtration selon l'une des revendications 1 à 11, caractérisé par le fait qu'il comporte une passerelle transversale (23) à l'intérieur de l'enceinte de filtration, disposée à un niveau correspondant à la cote prédéterminée de la surface supérieure de la couche de média filtrant (12).

**13.** Ensemble de filtration selon la revendication 12, caractérisé par le fait que la passerelle transversale (23) est de forme cruciforme, selon deux diamètres de l'enceinte de filtration, l'accès de ladite passerelle étant assuré par au moins un trou d'homme (25) prévu dans la paroi latérale de ladite enceinte.

**14.** Ensemble de filtration selon l'une des revendications 1 à 13, caractérisé par le fait que le média filtrant (12) est du sable dont la granulométrie moyenne est voisine de 0,7 mm, et le matériau léger constituant la couche de support (14) est une argile expansée dont la granulométrie moyenne se situe entre 10 et 25 mm.

**15.** Ensemble de filtration selon la revendication 14, caractérisé par le fait que les organes tubulaires (15) sont prévus dans la partie supérieure de la couche de support (14), et sont constitués par des crépines parallèles dont la paroi présente des trous ou fentes d'environ 0,4 mm de dimensionnement de passage.

**Claims**

1. Gas filter system comprising a generally cylindrical enclosure having an inlet for gas to be filtered in an upper part of said enclosure, a horizontal filter bed of predetermined thickness comprising a layer of a granular filter medium through which said gas to be filtered passes at a low speed, filter medium support means, and means for recovering filtered gas and conveying it to an outlet of said enclosure, characterized in that :
   - the filter enclosure (2) has a closed bottom (4) and an outlet (13) at the side of a lower part of said enclosure,
   - the support means are essentially constituted by a supporting layer (14) of a lightweight granular material having an average particle size greater than that of said filter medium (12) and extending down to said closed bottom (4) of the enclosure,
   - the means for recovering filtered gas are essentially constituted by a plurality of tubular members (15) having walls through which said gas can pass disposed in said lightweight supporting layer (14), and by an annular manifold (16) into which said tubular members discharge and on the outside periphery of which is the side outlet (13) of the filter enclosure.

2. Gas filter system according to claim 1, characterized in that a flexible mesh member (17) is disposed between the filter bed (12) and said supporting layer (14) and has a mesh size less than the average particle size of said filter medium in order to avoid segregation of said filter medium in said supporting layer and to guarantee that said predetermined thickness of said horizontal filter bed is maintained.

3. Gas filter system according to claim 2, characterized in that said flexible mesh member (17) is a woven fabric, and more particularly woven from glass fibers.

4. Gas filter system according to anyone of claims 1 to 3, characterized in that said lightweight granular material constituting said supporting layer (14) is an expanded material with a large average particle size, such as expanded clay.

5. Gas filter system according to anyone of claims 1 to 4, characterized in that said tubular members (15) disposed in said supporting layer (14) all lie in substantially the same horizontal plane.

6. Gas filter system according to claim 5, characterized in that said tubular members (15) disposed in said supporting layer are screens all disposed in substantially the same direction.

7. Gas filter system according to claim 6, characterized in that each of said screens (15) has a smooth free end (19) and said enclosure has a respective opening (18) in its side wall adapted to receive said smooth free end.

8. Gas filter system according to claim 6 or 7, characterized in that said screens (15) have walls in which there are holes or slots smaller than the average particle size of said filter medium.

9. Gas filter system according to anyone of claims 6 to 8, characterized in that said screens (15) constitute half-screens which each extend away from one side of a common diameter of said enclosure on which is disposed a cross-beam (21) to which the ends of said half-screens are fixed.

10. Gas filter system according to anyone of claims 1 to 9, characterized in that said annular manifold (16) into which said tubular members or screens (15) discharge is a torus of substantially constant rectangular cross-section.

11. Gas filter system according to claim 10, characterized in that said annular manifold (16) carrying the side outlet (13) is fixed to the lateral wall of said enclosure in such a way as to cover a plurality of holes (18) provided in said wall and through which pass free ends of said tubular members or screens, the said holes being preferably regularly distributed along the periphery of said wall.

12. Gas filter system according to anyone of claims 1 to 11, characterized in that it further comprises a transverse catwalk (23) inside said enclosure at a level corresponding to the surface of said filter medium when said filter bed (12) has said predetermined thickness.

13. Gas filter system according to claim 12, characterized in that said catwalk (23) is of cruciform shape, on two diameters of said enclosure, and said lateral wall of said enclosure comprises at least one manhole (25) providing access to said catwalk.

14. Gas filter system according to anyone of claims 1 to 13, characterized in that said filter medium (12) is sand having an average particle size substantially equal to 0.7 mm, and in that said lightweight material constituting said supporting layer (14) is expanded clay having an average particle size between 10 and 25 mm.

15. Gas filter system according to claim 14, characterized in that the tubular members (15) are in an upper part of said supporting layer (14) and comprise parallel screens in the walls of which are holes or slots approximately 0.4 mm wide.

**Ansprüche**

1. Filteranordnung für gasförmige Fluide mit einer im allgemeinen zylinderförmigen Hülle mit einem Eingang im oberen Teil, einer Schicht aus einem filtrierendem Medium aus einem granularen Material, das mit geringer Geschwindigkeit von dem zu filternden, gasförmigen Fluid durchquert wird, wobei diese Schicht ein horizontales Bett mit vorgegebener Dicke bildet, mit Stützvorrichtungen für das Filtriermedium und Vorrichtungen zum Wiedergewinnen des gefilterten, gasförmigen Fluids und zur seiner Kanalisation zu einem Ausgang aus der Hülle, gekennzeichnet durch die Tatsache, daß:
   - die Filterhülle (2) unten einen geschlossenen Boden und einen seitlichen Ausgang (13) aufweist,
   - die Stützvorrichtungen im wesentlichen aus einer Stützschicht(14)aus einem leichten Material besteht, dessen mittlere Granularität größer als die des Filtriermediums (12) ist, wobei sich die Stützschicht bis zum Boden (4) der Filterhülle erstreckt,
   - die Vorrichtungen zum Wiedergewinnen des gasförmigen Fluids im wesentlichen aus einer Mehrzahl röhrenförmiger Elemente (15), deren Wand den Durchgang des gasförmigen Fluids erlaubt, wobei diese röhrenförmige Elemente in der Stützschicht (14) aus einem leichten Material angeordnet sind, und aus einem ringförmigen Kollektor (18) bestehen, in den die röhrenförmigen Elemente münden und auf dessen äußerer Peripherie der seitliche Ausgang (13) der Filterhülle vorgesehen ist.

2. Filteranordnung nach Anspruch 1, gekennzeichnet durch die Tatsache, daß ein weiches maschiges Element (17) zwischen der Schicht des Filtriermediums(12) und der Stützschicht (14) vorgesehen ist, wobei die Maschenweite des Elements kleiner gewählt wird als die mittlere Granularität des Filtriermediums,um eine Segregation des Filtriermediums in der Stützschicht zu vermeiden und den Erhalt der vorgegebenen Dicke für das horizontale Bett zu garantieren.

3. Filteranordnung nach Anspruch 1, gekennzeichnet durch die Tatsache, dass das weiche, maschige Element (17) von einem Webtuch insbesondere aus Glasfasern gebildet ist.

4. Filteranordnung nach einem der Ansprüche 1 bis 3. gekennzeichnet durch die Tatsache, daß das leichte Material, das die Stützschicht (14) bildet, ein expandiertes, granulares Material, dessen mittiere Granularität ist und insbesondere expandierte Tonerde ist,

5. Filteranordnung nach einem der Ansprüche 1 bis 4, gekennzeichnet durch die Tatsache, daß die röhrenförmigen Elemente (15), die in der Stützschicht (14) vorgesehen sind, im wesentlichen in einer gleichen horizontalen Ebene angeordnet sind.

6. Filteranordnung nach Anspruch 5, gekennzeichnet durch die Tatsache, daß die röhrenförmigen Elemente (15), die in der Stützschicht (14) vorgesehen sind, Fransen sind, die sich im wesentlichen entlang einer gemeinsamen Richtung ausdehnen.

7. Filteranordnung nach Anspruch 6, gekennzeichnet durch die Tatsache, daß die Fransen (15) ein freies, glattes Ende (19) aufweisen, das in einer damit verbundenen Öffnung (18) der Seitenwand der Filterhülle aufgenommen ist.

8. Filteranordnung nach einem der Ansprüche 6 und 7, gekennzeichnet durch die Tatsache, daß die Wand der Fransen (15) Löcher oder Schlitze aufweist deren Durchlaßdimension kleiner ist als die mittlere Granularität des Filtriermediums.

9. Filteranordnurg nach einem der Ansprüche 6 bis 8, gekennzeichnet durch die Tatsache, daß die Fransen (15) von einem gemeinsamen Durchmesser der Filterhülle ausgehen, auf dessen Höhe eine Befestigung der Enden der so gebildeten Halbfransen auf einer gemeinsamen diametralen Traversen (21) vorgesehen ist.

10. Filteranordnung nach einem der Ansprüche 1 bis 9, gekennzeichnet durch die Tatsache, daß der ringförmige Kollektor (16), in den die röhrenförmigen Elemente oder Fransen (15) münden, aus einem Torus mit einem im wesentlichen konstanten, rechtwinkligen Querschnitt besteht.

11. Filteranordnung nach Anspruch 10, gekennzeichnet durch die Tatsache, daß der ringförmige Kollektor (16), der den seitlichen Ausgang (13) trägt, auf der Seitenwand der Filterhülle so befestigt ist, daß er eine Mehrzahl von Öffnungen (13) bedeckt, die in diese Wand gearbeitet sind, um das freie Ende der röhrenförmigen Elemente oder Fransen (15) hindurchzulassen, wobei die Öffnungen vorzugsweise regelmäßig auf der Peripherie der Wand verteilt sind.

12. Filteranordnung nach einem der Ansprüche 1 bis 11, gekennzeichnet durch die Tatsache, daß sie einen transversalen Steg (23) im Innern der Filterhülle aufweist, der auf einer Höhe angeordnet ist, die dem vorgegebenen Maß der oberen Oberfläche der Schicht des Filtriermediums (12) entsoricht.

13. Filteranordnung nach Anspruch 12, gekennzeichnet durch die Tatsache, daj der transversale Steg (23) in Kreuzform gebildet ist, entlang zwei Durchmessern der Filterhülle, wobei der Zugang zu diesem Steg durch wenigstens ein Mannloch (25), das in der Seitenwand der Hülle vorgesehen ist, sichergestellt ist.

14. Filteranordnung nach einem der Ansprüche 1 bis 13, gekennzeichnet durch die Tatsache, daß das Filtriermedium (12) Sand ist, dessen mittlere Granularität in der Nähe von 0,7mm liegt, und daß das leichte Material, das die Stützschicht (14) bildet, eine expandierte Tonerde ist, deren mittlere Granularität zwischen 10 und 25mm liegt.

15. Filteranordnung nach Anspruch 14, gekennzeichnet durch die Tatsache, daß die röhrenförmigen Elemente (15) im oberen Teil der Stützschicht (14) vorgesehen sind und aus parallelen Fransen bestehen, deren Wand Löcher oder Schlitze von einer Durchlaßdimension von ungefähr 0,4mm aufweist.

FIG.1

FIG_2

EP 0 274 304 B1

FIG.3

FIG.4

FIG.5

FIG.6a

FIG.6b